# EUROPEAN PATENT APPLICATION

(11) **EP 3 730 972 A1**
(43) Date of publication of application: **28.10.2020**
(21) Application number: 19170482.4
(22) Date of filing: 23.04.2019
(51) Int. Cl.: G01T 1/24

(54) **RADIATION DETECTION DEVICE FOR DETECTING GAMMA OR X-RAY RADIATION QUANTA**

(71) Applicant: Koninklijke Philips N.V., 5656 AG Eindhoven (NL)
(72) Inventor: WIECZOREK, Herfried Karl, 5656 AE Eindhoven (NL); SIMON, Matthias, 5656 AE Eindhoven (NL); JACOBS, Johannes Wilhelmus Maria, 5656 AE Eindhoven (NL)
(74) Representative: de Haan, Poul Erik

(57) **Abstract**

The present invention relates to a radiation detection device (5) with a direct conversion layer (30) comprising a first material having a perovskite crystal structure and a charge collection layer (50) comprising a second material being different from the first material. A metal grid (40) is arranged between these two layers. A first electrode (20) is connected to the direct conversion layer (30), whereas a second electrode (60) is connected to the charge collection layer (50). Applying a voltage between said electrodes (20, 60) enables to attract electrons (14) at one electrode and holes at the other electrode. A readout electronics (70a, 70b) is configured to convert the electrical charge collected at the electrodes (20, 60) into an electrical current or voltage signal, which is then further processed.

## Description

### FIELD OF THE INVENTION

The present invention relates to a radiation detection device for detecting gamma or x-ray radiation quanta.

### BACKGROUND OF THE INVENTION

X-ray imaging is applied in various technical fields in order to obtain information about internal structures within a region of interest of an object. For example, medical x-ray imaging devices are used to obtain information about internal structures within a patient's body and industrial x-ray imaging devices are used, e.g., for quality control of manufacturing processes of different devices.

X-ray imaging devices typically use small pixels of a dedicated spectral detector for determining energy of localized photon-to-electron conversions in a so-called direct conversion layer. Various materials, in particular wide band-gap semiconductors, have been tested, but state-of-the-art conversion layers in spectral detectors are usually based on cadmium zinc telluride (CdZnTe) or cadmium telluride (CdTe) technologies. These semiconductor materials with a large atomic number of its substituents (Cd, Zn, Te) provide excellent stopping power, resulting in superior detection efficiency even at high x-ray energies.

Semiconductor detectors provide several advantages in comparison to scintillator based detectors, which are another well-known class of x-ray imaging devices. Direct conversion semiconductor detectors are superior, e.g., in energy resolution, spatial resolution or pixel size. The performance of these devices is, however, limited due to the trapping of minority carriers in thick layers, lower collection efficiency due to depth-of-interaction effects, minority carrier tailing and limited energy resolution due to trapping.

Consequently, a need remains for gamma and x-ray semiconductor detectors with an absence of the typical drawbacks of semiconductor detectors discussed above.

One approach to overcome above mentioned drawbacks of semiconductor detectors is to use a direct conversion layer comprising a material having a perovskite crystal structure as disclosed in WO 2017/211603 A1. Perovskites are able to directly convert incoming photons to charge carriers, handle high irradiation rates, are easy to manufacture and cheap.

Another approach to overcome above mentioned drawbacks is disclosed in Semeniuk et al., Scientific Reports 7, 8659 (2017). This publication discloses a polycrystalline lead oxide (poly-PbO) detector with a co-planar grid, a so-called Frisch grid, which makes use of the advantageous effects of the Frisch grid technology (see O. Frisch, British Atomic Energy Report, BR-49, 1944). However, poly-PbO provides the presence of slow carriers, which diminishes the temporal resolution of the detector. Furthermore, it is difficult to match a PbO layer and typical readout electronics such that effective processing of electrical signals indicating the magnitude of gamma or x-ray radiation is possible.

### SUMMARY OF THE INVENTION

It is an object of the present invention to provide a radiation detection device for detecting gamma or x-ray radiation quanta in which an improved timing accuracy and energy resolution is obtained.

According to the present invention, a radiation detection device for detecting gamma or x-ray radiation quanta is presented that comprises:
a direct conversion layer having two mutually opposing faces and comprising a first material having a perovskite crystal structure;
a charge collection layer having two mutually opposing faces and comprising a second material being different from the first material, wherein a first face of the direct conversion layer is in contact with a first face of the charge collection layer;
a first electrode in contact with at least a portion of a second face of the direct conversion layer;
a second electrode in contact with at least a portion of a second face of the charge collection layer; and
a grid with a grid spacing arranged in or on the first face of the direct conversion layer and/or in or on the first face of the charge collection layer.

The absorption of gamma or x-ray photons in the direct conversion layer results in the generation of a charge cloud. The charge cloud is separated into its constituent electrons and holes by a bias voltage that is applied between the first electrode and the second electrode. Consequently, the electrons and holes migrate toward the first electrode and second electrode, respectively. The magnitude of charge collected at the first or at the second electrode is indicative of the gamma or x-ray photon energy. High energy resolution is achieved by forming the direct conversion layer from a semiconductor, because semiconductors generate a high number of electron-hole pairs in response to the reception of gamma or x-ray photons. According to the present invention, the direct conversion layer comprises a first material having a perovskite crystal structure and hence comprises a bandgap to generate electron-hole pairs in response to the reception of gamma or x-ray photons. A large number of electron-hole pairs results in a large signal-to-noise ratio.

The first electrode is either an anode, i.e., a positively charged electrode, or a cathode, i.e., a negatively charged electrode. The second electrode is also either an anode or cathode. If the first electrode is an anode, the second electrode has to be a cathode and vice versa. In the following, the second electrode, which is in contact with the charge collection layer, is the anode. This enables to attract electrons into the charge collection layer and to the anode to use them for further processing of an electric signal. It is favorable to use the electrons instead of the holes in typical semiconductor materials used for direct conversion materials, such as CdZnTe, CdTe or GaAs, as electrons typically comprise higher mobilities than holes. However, the direct conversion material used (i.e., an inorganic-organic perovskite) according to the present invention tends to have a better hole than electron conduction. Hence, it is another embodiment of the present invention in which the second electrode is the cathode and the first electrode the anode. Nevertheless, if not mentioned differently, the cathode is referred to the first electrode, whereas the anode is referred to the second electrode in the following for simplification. The second electrode is preferably a multi-pixel electrode having multiple electrode elements, as defined in a preferred embodiment.

The grid with a grid spacing is arranged in or on the first face of the direct conversion layer and/or in or on the first face of the charge collection layer. Preferably, the grid is arranged on the first face of the charge collection layer or on the first face of the direct conversion layer. One possibility to fabricate the grid on either the direct conversion layer or charge collection layer is shadow mask evaporation, where the grid material is evaporated on either the charge collection layer or the direct conversion layer.

The charge collection layer comprises a second material being different from the first material and hence has no perovskite crystal structure. The first material having a perovskite structure is preferably an organic-inorganic perovskite. Direct converters like amorphous selenium (a-Se), lead oxide (PbO), and cadmium zinc tellurite (CdZnTe) have been previously developed for x-ray imaging or computer tomography. Such approach is, however, limited in x-ray absorption and density, availability or has a high cost price. It is therefore desirable to have a direct converter material with high absorption at moderate cost price, which is provided by using inorganic-organic halide perovskite materials. Furthermore, inorganic-organic halide perovskite materials need not to be provided in the form of single crystals, which allows for reductions in production costs. Further, these materials provide high quantum efficiency, fast temporal response, large radiation resistance, thermal and chemical stability.

According to an embodiment of the present invention, the organic-inorganic perovskite has the chemical formula ABX₃, wherein A is a first cation CₙHₙ₊₁R with R belonging to any random group, in particular a nitrogen-based group, and n a natural number; B a second cation, in particular an inorganic cation Pb²⁺, Sn²⁺, Eu²⁺ or Cu²⁺; and X an anion, in particular a halide such as Cl⁻, Br⁻, I⁻. Preferably, the first material is methylamine lead iodide, MA-PbI₃, or methylamine lead bromide, MA-PbBr₃.

According to another embodiment of the present invention, the grid is a metal grid, in particular a Frisch grid, having an electric potential being different from the electric potential of the first electrode and second electrode.

The Frisch grid was originally invented for gas detectors (see O. Frisch, British Atomic Energy Report BR-49, 1944). A metallic grid separates the direct conversion layer and charge collection layer. The grid, held on an electrical potential in between the first electrode and the second electrode, i.e., the cathode and anode, shields all carrier movement inside the direct conversion layer from the charge collection layer. Signals on the anode are only induced when carriers (e.g., electrons) move inside the charge collection layer between the metal grid and the anode, independent of their history. This enables a short shaping time and high count rates. The signal induced by minority carriers (e.g., holes), including trapping and later release in the direct conversion layer, is completely suppressed. It may therefore also improve sensitivity, detective quantum efficiency (DQE), modulation transfer function (MTF) and lag in an integrating mode of the radiation detection device.

The experimental implementation of such a grid in a detector and a proper working function of such a gamma or x-ray detector with a Frisch grid, which comprises a one-dimensional metal line structure and/or a two-dimensional metal pattern, such as a mesh grid, is challenging. In particular, the choice of the materials of the direct conversion layer and charge collection layer is essential. A resistivity mismatch, i.e., a large difference in resistivity, between the first material of the direct conversion and the second material of the charge collection layer may lead to a breakdown of the electric field in one of these layers. The inventors have discovered a way to overcome the technological challenges by combining a Si layer, a perovskite layer and a metal grid, which results in a radiation detection device with improved timing accuracy and energy resolution.

In accordance with another embodiment of the present invention, the second material, which is a material being different from the first material of the direct conversion layer, is a semiconductor material, in particular silicon, Si, or gallium arsenide, GaAs. The resistivity of the inorganic-organic perovskite is roughly in the range from 13-38 MΩcm, while the resistivity of silicon is up to 0.1 MΩcm. Hence, the choice of these two materials as a combination provides a mismatch in resistivity roughly equal to a factor of 200. On the contrary, the resistivity of CdZnTe or CdTe is even more different to the resistivity of Si providing a resistivity mismatch factor being drastically larger. Hence, the combination of the two materials, Si and CdZnTe, is, e.g., not a suitable choice for a hybrid x-ray or gamma detector with a direct conversion layer and charge collection layer as the electric field in the Si layer would break down due to its lower resistivity.

In accordance with another embodiment of the present invention, the thickness of the direct conversion layer is larger than the thickness of the charge collection layer. Preferably, the thickness of the charge collection layer is larger than one third of the grid spacing of the Frisch grid. Due to the much smaller resistivity of silicon in comparison to the resistivity of the inorganic-organic perovskite, the electric field strength in silicon (i.e., in the charge collection layer) is much smaller than the electric field strength in the inorganic-organic perovskite (i.e., in the direct conversion layer) by applying a voltage between the anode and cathode. Hence, the thickness of the charge collection layer should not be too thick in order to provide a good timing accuracy and to ensure that the electrons reach the anode. However, the charge collection layer must not be thinner than roughly one third of the grid spacing of the Frisch grid to ensure a homogenous electric field in the charge collection layer. The direct conversion layer, on the other hand, needs sufficient thickness to ensure that the photon-to-electron conversion occurs in the direct conversion layer and not in the charge collection layer.

In accordance with another embodiment of the present invention, the first electrode and/or the second electrode is substantially transmissible for gamma and/or x-ray radiation quanta. It is essential that at least one of the electrodes is transparent to gamma or x-ray radiation. Hence, an incoming x-ray photon can transmit one of the electrodes to enter the direct conversion layer to generate an electron-hole pairs. The electrodes may e.g. be formed as thin conductive plates or layers.

According to another embodiment, the second electrode comprises a plurality of laterally-separated electrode elements.

According to another embodiment, the radiation detection device further comprises a first electronic circuitry configured to convert the electrical charge (e.g., electrons) at the second electrode (i.e., anode) into an electrical current or voltage signal. Suitable electronic circuitry for conversion of the electric charge includes for example charge amplifiers, current amplifiers, or a transimpedance amplifier. The magnitude of the electrical current or voltage signal indicates the energy of the gamma or x-ray radiation quanta. Hence, the radiation detection device further comprises a second electronic circuitry configured to receive the electrical current or voltage signals to determine the energy of the gamma or x-ray radiation quanta.

Preferably, the first electronic circuitry is configured for each laterally-separated electrode element to convert the electrical charge collected at the electrode (i.e., the anode) into an electrical current or voltage signal. Hence, the second electronic circuitry is configured in said embodiment to receive the one or more electrical current or voltage signals to generate a summed signal indicative of the total charge collected at the one or more laterally-separated electrodes.

According to another embodiment of the present invention, said first electronic circuitry and/or the second electronic circuitry is a complementary metal oxide (CMOS) circuitry.

### BRIEF DESCRIPTION OF THE DRAWINGS

These and other aspects of the invention will be apparent from and elucidated with reference to the embodiment(s) described hereinafter. In the following drawings
Fig. 1 shows a schematic diagram of a computed tomography (CT) device.
Fig. 2A shows a cross-sectional view of an embodiment of a radiation detection device according to the present invention.
Fig. 2B shows a perspective view of the radiation detection device of Fig. 2A.
Fig. 3 illustrates a method to manufacture an embodiment of the radiation detection device according to the present invention.

### DETAILED DESCRIPTION OF EMBODIMENTS

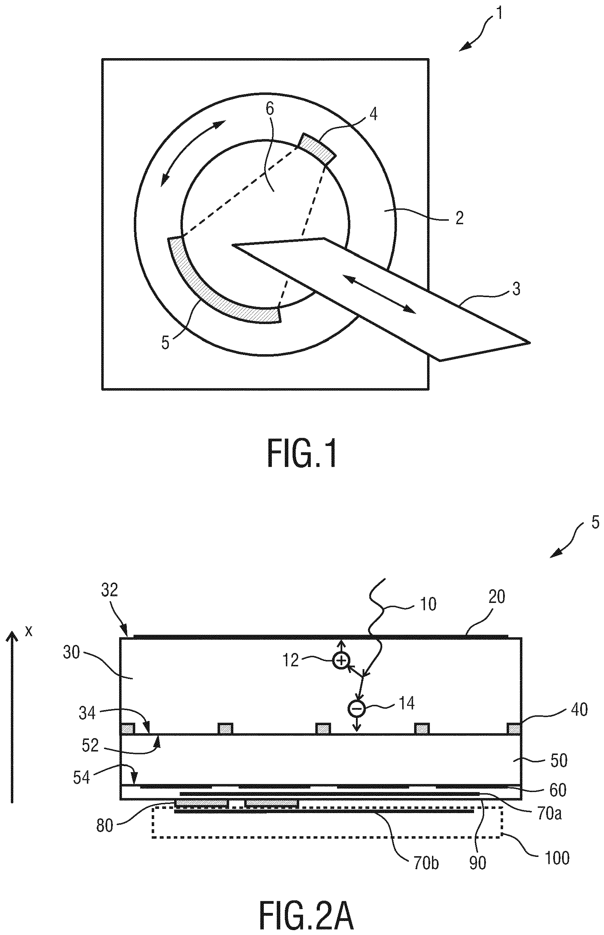

Fig. 1 shows a schematic diagram of a computed tomography (CT) device 1. The CT device 1 comprises a radiation detection device 5, in particular for use in single photon counting x-ray or gamma imaging such as photon counting x-ray or spectral CT, and an x-ray source 4 mounted on a rotatable gantry 2. The radiation detection device 5 may be one as disclosed according to the present invention. A subject to be scanned (not shown), such as a patient, is positioned on a movable support 3, which during scanning moves through examination region 6, while the gantry 2 rotates around the examination area and the x-ray source 4 emits x-ray radiation. The x-ray radiation passes through the examination area 6, wherein x-ray radiation is usually attenuated differently by different regions of the subject, and is detected by the radiation detection device 5, in which the detected x-ray radiation is converted to electronic information that is further processed in further processing equipment (not shown) to visual information that is displayed to a user, such as a physician.

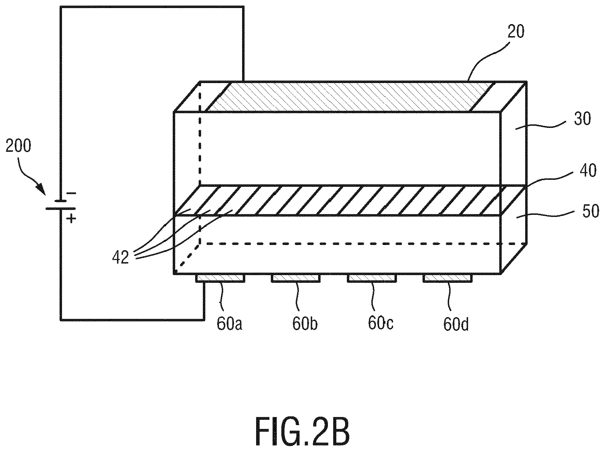

Fig. 2A shows a cross-sectional view of an embodiment of the radiation detection device 5 for detecting gamma or x-ray quanta according to the present invention. A perspective view of the same embodiment is shown in Fig. 2B. According to said embodiment the radiation detection device 5 for detecting radiation quanta 10, such as gamma quanta or x-ray quanta, comprises a direct conversion layer 30 having two mutually opposing faces 32, 34 and comprising a first material having a perovskite crystal structure. Further, said radiation detection device 5 comprises a charge collection layer 50 having two mutually opposing faces 52, 54 and comprising a second material being different from the first material. A first face 34 of the direct conversion layer 30 is in contact with a first face 52 of the charge collection layer 50. A first electrode 20 is in contact with at least a portion of a second face 32 of the direct conversion layer 30, a second electrode 60 is in contact with at least a portion of a second face 54 of the charge collection layer 50. A grid 40 with a grid spacing 42 is arranged on the first face 34 of the direct conversion layer 30 and/or on the first face 52 of the charge collection layer 50.

As shown in Fig. 2B, the second electrode 60 is held at a less repelling positive potential, whereas the first electrode 20 is held at a more repelling potential, such as the ground or a negative potential. The voltage is supplied, e.g., by a power supply 200. The Frisch grid is preferably held on an electrical potential (not shown) being different from the electrical potential of the first electrode 20 and the second electrode 60. The electric potential of the grid 40 should be in between the electric potentials of the first electrode 20 and the second electrode 60. The electric field between the first electrode 20 and the second electrode is typically in the range of 0.01-10 V/µm, preferably in the range of 0.1-1 V/µm. However, the absolute values of the electrical potentials are arbitrary and only limited by practical considerations and may depend on the implementation and application.

Returning back to Fig. 2A, when radiation quanta (photons) 10 pass the cathode (i.e., the first electrode) 20 and penetrate into the direct conversion layer 30, the quanta interact with the direct conversion material comprising a material with a perovskite crystal structure. The interaction generates numerous electron-hole pairs, whereas one generated electron 14 and one generated hole 12 is exemplary shown in Fig. 2A. The positively charged hole 12 drifts towards the negatively charged cathode 20, while the negatively charged electron 14 drifts towards the more positively charged anode (i.e., the second electrode) 60. When the electron 14 approaches the anode 60, a signal is induced which is indicative of a count or charge of the electron 14 that approached the anode 60. The signal is then further processed by a readout electronics 70a comprising a first electronic circuitry (not shown) to convert electrical charge collected at the anode 60 into an electrical current or voltage signal and a second electronic circuitry (not shown) to receive the electrical current or voltage signals and to determine the energy of the radiation quanta 10 by the magnitude of the electrical current or voltage signals. Optionally, said readout electronics 70b is placed on a separate CMOS chip 100, which is connected by bump bonds 80 as it is shown by the additional dashed box in Fig. 2A.

As already explained above, the charge collection layer 50 is preferably a silicon layer. In another embodiment a separate layer, in particular a so-called readout layer 90, may be used, which is, e.g., another silicon wafer connected to the readout layer 50 as shown in Fig. 2A. The layers 50, 90 may also be evaporated on top of each other. Said readout layer 90 may comprise a CMOS circuitry for readout needs and may preferably be made of a silicon material with a lower resistivity compared to the resistivity of the charge collection layer. This may be obtained by different kinds of doping for the silicon of the charge collection layer 50 and the silicon of the readout layer 90.

For many semiconductor materials used as direct conversion materials the electron charge is measured at the anode instead of measuring the hole charge at the cathode. This configuration is also shown in Fig. 2A. Most semiconductor materials, such as GaAs or ZnTe, have a larger electron mobility than hole mobility. Furthermore, electrons in semiconductor materials are in general less susceptible to the effect of trapping defects. This phenomenon reduces the quantity of charge collected by the respective electrode, and consequently a higher signal to noise ratio charge signal can be measured at the anode as compared to the cathode. Thus, the charge is typically measured by detecting the current received at the anode.

However, using an inorganic-organic perovskite as direct conversion material is different as perovskites tend to have a better hole than electron conduction. Thus, the configuration shown in Fig. 2A is only one possible embodiment. Hence, there are basically two different suitable configurations. According to the first configuration, the anode 20 is in contact with the charge collection layer 50, which is preferably n-doped silicon in that case, and the cathode 60 is in contact with the direct conversion layer 30 with a perovskite crystal structure. According to a second configuration, the anode 20 is in contact with the direct conversion layer 30 with a perovskite crystal structure, and the cathode 60 is in contact with the charge collection layer 50, which is preferably p-doped silicon in that case (configuration not shown in the figures).

With reference to Fig. 2A, the potential difference to be applied between the anode 20 and the cathode 60 is preferably determined in accordance with an electric field that causes the charge carriers (i.e., the electrons 14 and holes 12) to drift to their respective electrodes. A low potential difference causes charge carriers to migrate slowly through the process of drift, whereas higher potential difference causes the charge carriers to move more quickly. At a very high potential difference the charge carriers may undergo impact ionization where an avalanche current is generated following charge carrier collisions with the semiconductor atoms. Hence, preferably, the potential difference is below the threshold for impact ionization.

According to Figs. 2A and 2B, the direct conversion layer 30 is placed between the cathode 20 and the grid 40. In an exemplary implementation, the cathode 20 is held at zero potential, while the anode 60 is held at the attracting potential. In other implementations the absolute values could be different, e.g., the anode 60 could also be held at zero potential and the cathode 20 could be held at high negative bias. The cathode 20 normally forms a continuous layer on the direct conversion layer 30 and is generally transparent to x-ray radiation. Hence, the cathode 20 maybe formed, e.g., from indium tin oxide (ITO) or a thin metal. The anode 60 is on the opposite side and is made up from an array grid of electrode pixels (i.e., electrode elements 60a, 60b, 60c, 60d; see Fig. 2B). The charge collection layer 50 is placed between the anode 60 and the grid 40. The anode 60 is held on an attracting positive potential to attract electrons to pass through the grid 40 and reach the anode 60.

The grid 40 establishes an electrostatic shield so as to eliminate/minimize charge induction on the pixel anode 60 due to the movement of charge carriers inside the direct conversion layer 30 (between the cathode 20 and the grid 40). Only after the desired charge carriers (i.e., electrons 14 according to the exemplary embodiment shown in Fig. 2A) have passed the grid 40 and entered the charge collection layer 50 (between grid 40 and anode 60), a signal is induced on the pixel anode 60 and detected by the readout electronics 70a.

The grid 40 is a metal grid, in particular a so-called Frisch grid. The material of the grid 40 can be any metal; most preferably, the metal is compatible with electronic silicon device processing, such as aluminum, gold or copper. The metal grid 40 comprises one-dimensional metal lines and/or is a two-dimensional pattern, i.e., a mesh grid. Fig. 2B reveals that the preferred structure is essentially thin wires with a grid spacing 42. The thickness of the wires is basically set by the lowest thickness that is technologically possible, preferably lower than 50 µm.

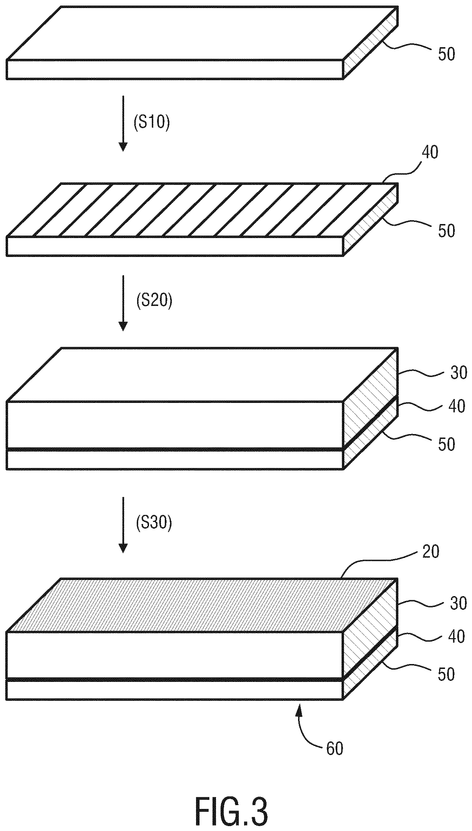

The direct conversion layer 30 preferably has a thickness of 0.2 to 20 mm (measured in x-direction in Fig. 2A). If the radiation detection device 5 is for single photon counting x-ray detectors, the thickness is typically in the range from 0.2 to 0.8 mm, while for CT the thickness is typically in the range from 3 to 8 mm, while for single-photon emission computed tomography (SPECT) the thickness is in the range from 6 to 20 mm. Preferably, these thicknesses may be obtained in a single processing step as it is explained later with reference to Fig. 3.

The typical dimensions of the grid spacing 42 of the grid are in the range from 0.1 to 0.3 mm for singe photon counting x-ray detection, 1 to 3 mm for CT and 2-8 mm for SPECT. Furthermore, the thickness of the charge collection layer 50 is preferably larger than one third of the grid spacing 42. The typical dimensions of the grid 40 are further comparable to the pixel pitch size of the anode 60 according to the embodiment shown in Figs. 2A and 2B.

It is an insight of the present invention that instead of state-of-the-art direct conversion materials, such as CdTe or CdZnTe, hybrid organic-inorganic materials comprising a perovskite structure are used for the direct conversion layer 30. These perovskites show a very fast x-ray response, which is not the case for conventional direct photon converting materials. Other fast materials, such as CdTe or GaAs, are produced and cut as thick crystals from a boule, which makes them extremely expensive and causes a lot of waste of material if thin layers are required. Perovskites are easier to process, which is explained with reference to Fig. 3 in the following, and easier to structure than single crystalline photon converting materials. Furthermore, perovskites are inherently much cheaper than CdTe, CdZnTe or GaAs.

Fig. 3 illustrates a method to manufacture an embodiment of the radiation detection device 5 according to the present invention. In this exemplary process a thinned silicon wafer of, e.g., 10 µm thickness is taken. The drift time for an electron (mobility µ=1400 cm²/Vs) would be 70 ns. This thinned silicon wafer later forms the charge collection layer 50, which is in contact with the anode 60 according to the embodiment shown in Figs. 2A and 2B. However, as already explained above it may also be an option to connect said charge collection layer 50 to the cathode 20 (not shown in the figures).

In a first step (S10) electrically conductive structures are applied to the thinned silicon wafer, e.g., by depositing metallic structures by a wet-chemical process at low cost. According to the embodiment shown in Fig. 3 the metallic structure is formed by metallic strips which form the metal grid 40. Preferred metals are aluminum, silver, copper or gold.

In a next step (S20) a perovskite (i.e., MA-PbI₃ or MA-PbBr₃) is formed on the charge collection layer 50 and the metal grid 40, e.g., by a single step deposition process at low temperatures (at room temperature or at a slightly elevated temperature). Another option to form the perovskite on the charge collection layer 50 is conductive coupling, i.e., the process of energy transfer between two independent conductive objects that is facilitated by their direct physical contact, of the charge collection layer 50 with a pre-fabricated perovskite layer.

In the last step (S30) an electrical contact structure forming the electrodes 20, 60, e.g., a deposited metal layer or a coated conductive organic material (e.g., ITO), is applied on the second face 32 of the perovskite direct conversion layer 30 and on the second face 54 of the silicon charge collection layer 50.

The radiation detection device 5 according to the present invention enables improved timing accuracy and energy resolution. Hence, the radiation detection device 5 may be applied as a multi-energy and/or photon counting detector in an x-ray imaging device, particularly a CT device 1.

Alternatively, the radiation detection device 5 according to the present invention may be used in a nuclear medicine imaging device, such as positron emission tomography (PET) device or a single-photon emission computed tomography (SPECT) device.

If the radiation detection device 5 is used for photon counting x-ray, count rates may vary between 10⁸ cm⁻²s⁻¹ (pulsed fluoroscopy) and 2 x 10¹⁰ cm⁻²s⁻¹ (3D imaging or Cone Beam CT). Assuming carrier drift times of roughly 70 ns for electrons in perovskite with a charge carrier mobility of µ=25-100 cm²/Vs, the count rate per pixel would be limited about 10⁷ s⁻¹. Assuming further a pixel size (lateral dimension) of 150 µm, this enables counting of 4 x 10¹⁰ cm⁻²s⁻¹, which is high enough.

If the radiation detection device 5 is used for photon counting CT, the count rates may be up to 10¹¹ cm⁻²s⁻¹ (140 kV, 400 mA, direct beam). Currently tested CdZnTe (µ=1000 cm²/Vs) based photon counting CT concepts by the inventors use 900 V bias on 2 mm CdZnTe with 0.5 mm pixel size, which gives a drift time of 44 ns and a theoretical count rate below 8 x 10⁹ cm⁻²s⁻¹. The missing order of magnitude is due to the small pixel effect. A ten times higher count rate is made possible by use of the small pixel effect, which effectively reduced the drift time to a lower value measured at the readout electrode. Perovskite Frisch grid radiation detection devices as disclosed according to the present invention with 2 to 5 mm thickness and 500 µm pixel size would enable a count rate of 4 x 10⁹ cm⁻²s⁻¹. By having a limited dose rate range, a stable material, higher electric field, smaller pixels, or use of re-triggering modes, the count rates are even larger. Hence, the radiation detection device 5 is suitable for photon counting CT.

If the radiation detection device 5 is used for SPECT, a 5-8 mm thick perovskite layer is needed for 140 keV radiation. Without a Frisch grid this would result in a drift time of 0.25 ms, which is far too slow for pulse shaping. Using a Frisch grid enables a drift time of roughly 70 ns. Count rates in SPECT are low. Due to the high charge signal obtained from the direct conversion material this gives excellent energy resolution and at the same time diminishes the impact of minority carrier trapping.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A radiation detection device (5) for detecting radiation quanta (10) comprising:
a direct conversion layer (30) having two mutually opposing faces (32, 34) and comprising a first material having a perovskite crystal structure;
a charge collection layer (50) having two mutually opposing faces (52, 54) and comprising a second material being different from the first material, wherein a first face (34) of the direct conversion layer (30) is in contact with a first face (52) of the charge collection layer (50);
a first electrode (20) in contact with at least a portion of a second face (32) of the direct conversion layer (30);
a second electrode (60) in contact with at least a portion of a second face (54) of the charge collection layer (50); and
a grid (40) with a grid spacing (42) arranged in or on the first face (34) of the direct conversion layer (30) and/or in or on the first face (52) of the charge collection layer (50).

2. Radiation detection device (5) according to claim 1, wherein the first material having a perovskite structure is an organic-inorganic perovskite.

3. Radiation detection device (5) according to claim 2, wherein the organic-inorganic perovskite has the chemical formula ABX₃, wherein A is a first cation CₙHₙ₊₁R with R belonging to any random group, in particular a nitrogen-based group, and n a natural number; B a second cation, in particular an inorganic cation Pb²⁺, Sn²⁺, Eu²⁺ or Cu²⁺; and X an anion, in particular a halide such as Cl-, Br-, I-.

4. Radiation detection device (5) according to any one of the preceding claims, wherein the first material is methylamine lead iodide, MA-PbI₃, or methylamine lead bromide, MA-PbBr₃.

5. Radiation detecting device (5) according to any one of the preceding claims, wherein the grid (40) is a metal grid, in particular a Frisch grid, having an electric potential being different from the electric potential of the first electrode (20) and second electrode (60).

6. Radiation detection device (5) according to claim 5, wherein the metal grid (40) comprises a one-dimensional metal line structure and/or a two-dimensional metal pattern.

7. Radiation detection device (5) according to any one of the preceding claims, wherein the second material is a semiconductor material, in particular silicon, Si, or gallium arsenide, GaAs.

8. Radiation detection device (5) according to any one of the preceding claims, wherein the thickness of the direct conversion layer (30) is larger than the thickness of the charge collection layer (50).

9. Radiation detection device (5) according to any one of the preceding claims, wherein the thickness of the charge collection layer (50) is larger than one third of the grid spacing (42).

10. Radiation detection device (5) according to any one of the preceding claims, wherein the first electrode (20) and/or the second electrode (60) is transmissible for the radiation quanta.

11. Radiation detection device (5) according to any one of the preceding claims, in which the second electrode (60) comprises a plurality of laterally-separated electrode elements (60a, 60b, 60c, 60d).

12. Radiation detection device (5) according to any one of the preceding claims, further comprising:
a first electronic circuitry configured to convert electrical charge collected at the second electrode (60) into an electrical current or voltage signal; and
a second electronic circuitry configured to receive the electrical current or voltage signals and to determine the energy of the radiation quanta (10) by the magnitude of the electrical current or voltage signals.

13. Radiation detection device (5) according to claim 12, wherein the first electronic circuitry and/or the second electronic circuitry is a complementary metal oxide semiconductor, CMOS, circuitry.
